# EUROPEAN PATENT SPECIFICATION

(11) **EP 2 817 381 B1**
(45) Date of publication and mention of the grant of the patent: **16.10.2019**
(21) Application number: 13705355.9
(22) Date of filing: 08.02.2013
(51) Int. Cl.: C09K 8/03, C09K 8/48, C09K 8/60, C09K 8/62, C09K 8/72

(54) **WELL TREATMENT METHOD USING A MODIFIED PARTICULATE WEIGHTING AGENT**
METHODE ZUR BOHRLOCHBEHANDLUNG UNTER NUTZUNG VON MODIFIZIERTEN BESCHWERUNGSMITTELN
PROCÉDÉ DER TRAITEMENT D'UN PUITS, UTILISANT DES CHARGES ALOURDISSANTES MODIFIÉES

(30) Priority: 23.02.2012 US 201213403079
(43) Date of publication of application: 31.12.2014
(73) Proprietor: Halliburton Energy Services, Inc., Houston, TX 77072 (US)
(72) Inventor: RINCON-TORRES, Marco Tulio, 50400 Kuala Lumpur (MY)
(74) Representative: Hoffmann Eitle
(86) International application number: PCT/US2013/025309
(87) International publication number: WO 2013/126219

(56) References cited:
- WO-A1-2008/033591
- WO-A2-2011/063023
- GB-A- 2 315 505
- US-A1- 2003 153 646
- US-A1- 2007 036 977
- US-A1- 2008 269 079
- Bernard P. Binks ET AL: "Influence of the degree of fluorination on the behaviour of silica particles at air-oil surfaces", SOFT MATTER, vol. 9, no. 3, 1 January 2013 (2013-01-01) , pages 834-845, XP55440593, ISSN: 1744-683X, DOI: 10.1039/C2SM27395K

## Description

### BACKGROUND

The present invention relates to additives used in treatment fluids in subterranean operations. More specifically, the present invention relates to modified particulate weighting agents used in treatment fluids such as drilling and cementing fluids.

Treatment fluid roles include, for example, stabilizing the well bore and controlling the flow of gas, oil or water from the formation to prevent the flow of formation fluids or prevent the collapse of pressured earth formations. The column of a treatment fluid exerts a hydrostatic pressure proportional to the depth of the hole and the density of the fluid. For example, high-pressure formations may require a fluid with a specific gravity as high as 3.0.

A variety of materials are presently used to increase the density of treatment fluids, including the use of dissolved salts such as sodium chloride, calcium chloride and calcium bromide. Alternatively, powdered minerals such as barite, calcite and hematite may be added to a fluid to form a suspension of increased density. The use of finely divided metal, such as iron, as a weight material in a drilling fluid has also been described. The use of finely powdered calcium or iron carbonate has also been indicated; however, the plastic viscosity of such fluids rapidly increases as the particle size decreases, thus limiting the utility of these materials.

Another demand on a typical treatment fluid additive is that it should form a stable suspension that does not readily settle out. Secondarily, the suspension may beneficially exhibit a low viscosity to facilitate pumping and minimize the generation of high pressures. Ideally, the treatment fluid slurry should also exhibit low fluid loss. Conventional weighting agents such as powdered barite may require the addition of a gellant such as bentonite for water-based fluids, or organically modified bentonite for oil-based fluids. A soluble polymer viscosifier may be also added to slow the rate of the sedimentation of the weighting agent. However, as more gellant is added to increase the suspension stability, the fluid viscosity (plastic viscosity and/or yield point) increases undesirably.

Submicron particles have also been employed as weighting agents using surfactant-based coatings to help disperse the particles in the base fluid. However, in such applications the surfactants are only weakly linked to the surface of the particles and the adherence of the surfactant to the particle competes with other phenomenon such as the formation of emulsion droplets and/or the interaction of the surfactant with other solids that may have a higher affinity for the surfactant than the weighting particle.

WO 2008/033591 A1 discloses a method of formulating a wellbore fluid that includes providing a base fluid and adding a weighting agent coated with a dispersant.

### SUMMARY OF THE INVENTION

The present invention relates to additives used in treatment fluids in subterranean operations. More specifically, the present invention relates to modified particulate weighting agents used in treatment fluids such as drilling and cementing fluids.

The present invention provides a method comprising the steps of: providing a treatment fluid for use in a subterranean formation, the treatment fluid comprising an oleaginous base fluid and a modified particulate weighting agent which comprises: a particulate metal oxide comprising an oxide of a metal or metalloid selected from manganese, iron, titanium, silicon, zinc, aluminium, barium, calcium and magnesium; and a polymer covalently linked to the particulate metal oxide, the polymer being selected from perfluoroalkyl polymers and perfluoropolyethers; and introducing the treatment fluid into the subterranean formation; wherein the oleaginous base fluid is a cycloalkane.

The features and advantages of the present invention will be readily apparent to those skilled in the art upon a reading of the description of the preferred embodiments that follows.

### DETAILED DESCRIPTION

The present invention relates to additives used in treatment fluids in subterranean operations. More specifically, the present invention relates to modified particulate weighting agents used in treatment fluids such as drilling and cementing fluids.

Of the many advantages, the present invention provides methods employing polymer-modified particulate weighting agents with anti-sagging properties that are readily dispersible in the base fluid of the treatment fluid. The polymer is hydrophobic for use in oil-based treatment fluids. The hydrophobic polymer is covalently linked to the particulate weighting agent to provide superhydrophobic particles which may be useful in, for example, the continuous oil phase of inverse emulsions.

Weighting agents employed in methods of the invention may also be designed to enhance repulsive forces via the linked polymer, which may assist in dispersion of the micronized particles, and reduce and/or eliminate agglomeration, which may help prevent settling. The linked polymer structures are believed to minimize Van der Waals forces, which may cause particle aggregation and subsequently result in solids settling as typically observed with certain weighting materials, especially in oil-based inverse emulsions.

Moreover, weighting agents employed in methods of the invention may display low viscosity and gel strength properties, even when using micronized particulates on 1-500 nanometer scale. Without being bound by theory, the steric bulkiness of the linked polymer may reduce particle-particle interactions and thus reduce the shear radius.

The modified particulate weighting agents employed in methods of the invention may further exert low impact on the subterranean location resulting in little to no damage to the formation. First, the small particle size and minimized aggregation may allow the modified particulate weighting agents to be readily flushed out of the formation. In the case of hydrophobically modified particulate weighting agents, for example, such agents may be taken up into the oil phase of the reservoir pore matrix structure, with minimal interaction with potential water layers attached to pore linings in water-wet reservoir rocks. Thus, in some embodiments, the combination of size and surface properties may aid in removal of the weighting agent inside the formation. In some embodiments, the modified particulate weighting agents may be solubilized in acids providing advantages where acid stimulating treatments are employed. In some such embodiments, the removal of the weighting agent may be facilitated by the dissolution of the polymer, the core metal oxide particulate, or both.

Finally, modified particulate weighting agents employed in methods of the invention may incorporate stimuli responsive smart polymers to alter the properties of the weighting agent as desired. For example, a superhydrophobic surface may be altered to a hydrophilic surface after exposing the linked polymer to changes in pH or other stimuli, such as temperature. Given the guidance provided herein, other advantages will be apparent to the skilled artisan.

As used herein, the term "treatment fluid" includes any fluid used in drilling, cementing, stimulation, or other operations conducted in a subterranean location. The term "treatment" does not imply any particular action by the fluid relative to the subterranean formation. In addition to the modified particulate weighting agents disclosed herein, treatment fluids may include other additives such as viscosifiers, emulsifiers, proppants, pH modifying agents, cementing compositions, lost circulation materials, corrosion inhibitors, other subterranean treatment fluid additives, and the like, depending on the function of the treatment fluid.

As used herein, the term "weighting agent" refers to particulates used to modulate the density of the treatment fluid. In particular, weighting agents employed in methods of the invention may be used to increase the density of the treatment fluids.

As used herein, the term "modified" means the particulate weighting agent and polymer are linked by way of covalent bonding. "Modified," as used herein, is distinguished from mere physical adsorption (physisorption). Such physical adsorptive processes include, for example, the physical adsorption of polymers or surfactants to a weighting agent particulate surface through weak induced dipole moments. Such physical adsorption may be highly reversible and lead to undesired separation of the polymer/surfactant and the weighting agent particulate.

"Modified," as used herein, is also distinguished from encapsulation without bonding or physical/shear grinding together of polymer and weighting agent components. Both of these motifs lack chemical bonding between a polymer and particulate weighting agent. In the case of mere encapsulation, changes in the polymer morphology upon exposure to solvents or other conditions, such as pH or temperature, may lead to a "loose" weighting agent particle within a polymer cage and may even result in the loss of the weighting agent particle in the case of sufficiently porous polymer structures. In addition to the robust connectivity between polymer and particulate weighting agent, the modified particulates disclosed herein are readily tailored in a bottom-up approach allowing modification at the particulate weighting agent surface with a first polymer and subsequent modification with a second polymer or other chemical agent via further chemical reaction. Such bottom-up tailoring of the particulate weighting agent surface may not be accessible using intimate mixing/shear mixing/dry blending processes which may result in exposed surfaces lacking homogeneity. That is the surface may comprise a random array of exposed polymer and exposed particulate weighting agent. Moreover, the use of chemical modification may allow for superior control of coating thickness of the polymer layer relative to physical mixing/coating processes.

As used herein, the term "particulate" refers to particles having dimensions ranging from about 1 nm to about 10 microns. In some embodiments, the particulate weighting agents may be nanoparticles ranging in size from about 1 nm to about 100 nm, including any value inbetween or fractions thereof. In some embodiments, the particulate weighting agents may range in size from about 1 nm to about 500 nm, including any value inbetween or fractions thereof. In some embodiments, the particulate weighting agents may range in size from about 0.5 microns to about 1 microns, including any fractional value inbetween. In some such embodiments, the particulates may be referred to as sub-micron particles. Sub-micron particles may be distinguished from nanoparticles based on bulk matter behavior of sub-micron particles versus quantum behavior of nanoparticles. In some embodiments, particulates may range in size from about 1 micron to about 10 microns, including any value inbetween or fractions thereof. In some embodiments, particulates may range in size from about 2 microns to about 5 microns, including any value inbetween or fractions thereof.

Any of the aforementioned ranges of sized particulates may be accessed via micronization techniques as known in the art. As used herein, the term "micronized" refers to particulates that have been processed to provide particle sizes on micron scale or less. For example, micronized particles may have an effective diameter from between about 1 micron to about 10 microns in some embodiments, and from about 1 micron to about 5 microns in other embodiments, including any value inbetween or fractions thereof. The effective diameter refers to an average particle diameter based on an idealized spherical geometry, with the understanding that the particles may exhibit imperfections that cause the particle to deviate from perfect spherical shape. The term "micronized" also encompasses submicron sized particles including particles less than about 1 micron. Submicron particles also include nanometer scale particulates ranging in size from about 1 nanometer to about 1000 nanometers, the distinction between bulk and quantum behavior notwithstanding. Thus, where quantum behavior may be evident, the particulates may more appropriately be referred to as nanoparticles.

Micronized particulates are accessed via any methods known in the art. Such methods include milling, bashing, grinding, and various methods employing supercritical fluids such as the RESS process (Rapid Expansion of Supercritical Solutions), the SAS method (Supercritical Anti-Solvent) and the PGSS method (Particles from Gas Saturated Solutions).

As used herein, the term "metal oxide" refers to oxides of iron, silicon, aluminum, manganese, barium, calcium, magnesium, zinc and titanium.

As used herein, the term "linked," when used in reference to the relationship between the polymer and the particulate weighting agent, means chemically bonded by covalent bonding. In some embodiments, the chemical bonding provided may be substantially irreversible, meaning that forcing conditions may sever the bonding between the weighting agent and the polymer. In some embodiments, the chemical bonding provided may be moderately reversible. In some such embodiments, reversible attachment may include cleavage of the polymer from the weighting agent under special reaction conditions such as base labile detachment, acid labile detachment, photolabile detachment, oxidative or reductive detachment, and the like. "Linked" also encompasses the use of smaller organic fragments, such as linkers, to indirectly connect the polymer and the weighting agent. Linkers may be of any type commonly employed in the art of solid phase synthesis. Linkers may include oligomers, such as peptides, polyethylene glycols, propylene glycols, and the like. Examples of linkers may be any found in, for example, "Linker Strategies in Solid-Phase Organic Synthesis," Peter H. Scott editor, John Wiley & Sons, Inc., Somerset, NJ, December 2009.

In some embodiments, providing the treatment fluid may include providing a fluid intended for use as a drilling fluid. The methods of the invention may include the use of drilling fluids to control formation pressure. In some such embodiments, the drilling fluid may include the weighting agents disclosed herein along with viscosifiers, other densifying additives such as brines, and other agents depending on the nature of the of the formation being drilled. Drilling fluids may be formulated to be thixotropic to aid in the removal of drill cuttings from the wellbore. Drilling fluids may further include bridging agents, lost circulation materials, and other agents to provide zonal isolation in porous formations. Drilling fluids may include other additives to minimize formation damage, provide lubrication during drilling and provide cooling to the drill bit.

In some embodiments, a treatment fluid according to the present invention may be an oil-based drilling mud. As used herein, "oil-based drilling mud" includes invert-emulsion oil muds. Oil-based mud may include a petroleum product as a base fluid. Oil-based muds may be used to provide increased lubricity, enhanced shale inhibition, and greater cleaning abilities with lower viscosity. Oil-based muds also withstand greater heat without breaking down.

Additives may be included in the oil based mud in conjunction with the weighting agents disclosed herein. Various thickeners may be employed to modulate the viscosity of the fluid. Exemplary thickeners may include, without limitation, xanthan gum, guar gum, glycol, carboxymethylcellulose (polyanionic cellulose, PAC or CMC), scleroglucan gum, synthetic hectorite, hydroxyethyl cellulose (HEC), diutan gum or starch, or any combination thereof. In some embodiments, a drilling fluid according to the present invention may include, deflocculants to reduce viscosity when employing clay-based muds; anionic polyelectrolytes, such as acrylates, polyphosphates, lignosulfonates or tannic acid derivatives such as Quebracho. Other additives may include lubricants, shale inhibitors, fluid loss control additives to control loss of drilling fluids into permeable formations, anti-foaming agents, pH-modulating additives, antimicrobial agents, H₂S/CO₂ and/or oxygen scavengers, corrosion inhibition agents.

In some embodiments, the drilling fluid is a synthetic-based mud (SBM). SBMs may include systems based on commercially available formulations. Any such commercial formulation may be modified by inclusion of weighting agents disclosed herein.

The base fluid, or carrier fluid, used in the drilling fluids of the present invention is an oleaginous base fluid (e.g., invert emulsions). The oleaginous base fluid is a cycloalkane.

Generally, according to the present invention, the carrier fluid may be present in a treatment fluid in an amount sufficient to form a pumpable fluid. By way of example, the carrier fluid may be present in a drilling fluid according to the present invention in an amount in the range of from about 20% to about 99.99% by volume of the drilling fluid, including any value inbetween and fractions thereof. One of ordinary skill in the art with the benefit of this disclosure will recognize the appropriate amount of carrier fluid to include within the drilling fluids of the present invention in order to provide a drilling fluid for a particular application.

In addition to the carrier fluid, the weighting agent may be present in the drilling fluid in an amount sufficient for a particular application. For example, the modified particulate weighting agent may be included in a drilling fluid to provide a particular density. In certain embodiments, the modified particulate weighting agent may be present in the drilling fluid in an amount up to about 60% by volume of the drilling fluid (v%) (e.g., about 5%, about 15%, about 20%, about 25%, about 30%, about 35%, about 40%, about 45%, about 50%, about 55%, and about 60%, including all values inbetween and fractions thereof). In certain embodiments, the weighting agent may be present in the drilling fluid in an amount in a range from about 10 v% to about 60 v%.

In some embodiments of the present invention, providing the treatment fluid entails providing a cementing fluid comprising the weighting agents disclosed herein. In some embodiments, some such methods of the invention further include allowing the cementing fluid to set in an area in the subterranean formation.

Cementing fluids include any cement composition comprising a cementitious particulate. Cementing fluids may include any hydraulic or non-hydraulic cement composition, such as a Portland or Sorel cement, respectively. Suitable examples of hydraulic cements that may be used include, but are not limited to, those that comprise calcium, aluminum, silicon, oxygen, and/or sulfur, which set and harden by reaction with water. Examples include, but are not limited to, Portland cements, pozzolanic cements, gypsum cements, calcium phosphate cements, high alumina content cements, silica cements, high alkalinity cements, and mixtures thereof. Cementing fluids may include any composition used in the formation of set cement sheath in a wellbore. Cementing fluids may include cementing kiln dust (CKD), fly ash, and other additives as recognized by one skilled in the art.

Cementing fluids according to the present invention may include lost circulation materials, defoaming agents, foaming agents, plastic fibers, carbon fibers or glass fibers to adjust a ratio of the compressive strength to tensile strength (CTR), elastomers, and rubber, accelerator or retarders to modulate the setting time, and the like, any of which may be used in any combination. In some embodiments, weighting agents disclosed herein are used in conjunction with spacer fluids ahead of cementing fluids. In some such embodiments, the spacer fluid may employ weighting agents disclosed herein, while the cementing fluid does not require a weighting agent.

One skilled in the art will appreciate that while drilling and cementing fluids are described herein above, other subterranean treatment fluids may employ weighting agents as disclosed herein, for example, those that may benefit from the additional weight provided by the weighting agents of the present invention or any of the advantages disclosed herein.

In some embodiments, the treatment fluid may be introduced into a subterranean formation or a particular zone in a subterranean formation. While the most common methods for introducing fluids into a formation comprise pumping the fluid into the formation via the casing string, other treatment fluids may be delivered in the annulus between the casing string and the wall of the formation. In some embodiments, a treatment fluid may be delivered via the casing string and then into targeted fractures within the formation. In some embodiments, the treatment fluid comprising weighting agents disclosed herein are introduced into fractures created by a perforation gun. In some such embodiments, the weighting agent is part of a fracturing fluid.

In some embodiments, treatment fluids employing weighting agents disclosed herein may be useful during 1) drilling, 2) cementing, 3) completion (including perforation), 4) well intervention or work-over, 5) hydraulic fracturing or acidification and 6) as packer fluid (fluid left between surface casing and production tubing, above reservoir isolating packer). The skilled artisan will recognize the utility of treatment fluids incorporating weighting agents disclosed herein in other applications.

In some embodiments, methods of the invention employ a particulate weighting agent may be a metal oxide particle less than about 5 microns. For example, the metal oxide particle may be about 1 micron, about 2 microns, about 3 microns, about 4, microns or about 5 microns, including fractions thereof. In some embodiments, the metal oxide particle may be less than about 1 micron. Sub-micron metal oxide particles may have a particle size distribution such that at least 90% of the particles have a diameter ("d₉₀") below about 1 micron. In certain embodiments, the sub-micron metal oxide particles may have a particle size distribution such that at least 10% of the particles have a diameter ("di₀") below about 0.2 microns, 50% of the particles have a diameter ("d₅₀") below about 0.3 microns and 90% of the particles have a diameter (d₉₀) below about 0.5 micron.

In some embodiments, the metal oxide particles have at least one dimension that is about 500 nm or less. In some embodiments, the metal oxide may be about 500 nm, about 400 nm, about 300 nm, about 200 nm, about 100 nm, about 50 nm, about 10 nm, including any value inbetween and fractions thereof. Advantageously, in some embodiments, where the particle is smaller than about 500 nm, the treatment fluid need not include any suspending agent to maintain suspension of the modified particulate weighting agent. Thus, in some embodiments, the modified particulate weighting agent is capable of self-suspending without the aid of a suspending agent. In some such embodiments, the treatment fluid may exclude viscosifying agents, although, this will depend on the actual function of the treatment fluid. For example, a viscosifying agent may still be needed in a drilling fluid to aid in removing drilling cuttings. The use of smaller particle sizes may also help prevent sagging when used with or without suspending agents.

In some embodiments, the metal oxide particle may comprise a standard size weighting agent particle size including a d₅₀ of about 20 microns and a d₉₀ of about 70 microns. In some such embodiments, the treatment fluid may include suspending agents to aid in preventing the settling of the weighting agent.

In some embodiments, the metal oxide comprises a metal selected from the group consisting of manganese, iron, titanium, silicon, zinc, and any combination thereof.

In some embodiments, the metal oxide particle comprises manganese tetraoxide (Mn₃O₄). In some such embodiments, the particle is provided as a nanoparticle. Manganese tetraoxide is particularly useful in the present invention due to the ability to degrade the weighting agent by dissolution of the manganese tetraoxide upon treatment with an acid source.

Hydrophobic polymers may include any degree of crosslinking, but generally lack the presence of substantial numbers of heteroatoms that confer polar character to the polymer. The term "hydrophobic polymer" is used herein to mean any polymer resistant to wetting, or not readily wet, by water, that is, having a lack of affinity for water.

Methods of the invention employ hydrophobic polymers to provide modified particulate weighting agents that are superhydrophobic. The hydrophobic polymer is selected from perfluoroalkyl polymers and perfluoropolyethers. The weighting agents constructed from such polymers are particularly well suited for oil-based treatment fluids, including oil-based drilling muds.

Methods of the invention include a weighting agent in which the polymer is covalently linked to the metal oxide particle. As described herein above, the nature of the chemical bonding may be configured to be substantially irreversible or moderately reversible. In some embodiments, the polymer is linked to the metal oxide via a linker molecule as described above.

Polymers employed in the present invention may vary in molecular weight and degree of cross-linking suitable for compatibility with the intended application of the weighting agent. For example, the molecular weight of the polymer and its degree of cross-linking may be chosen for any number of physical properties such as swellability, stiffness, strength, and toughness.

In some embodiments, the fluid is a drilling fluid or a cementing fluid as described herein. In some such embodiments, the metal oxide particle is a nanoparticle. In some such embodiments, the weighting agent is capable of self-suspending without the aid of a suspending agent.

In some embodiments, the weighting agent disclosed herein are used to increase the treatment fluid density to provide at least one function selected from the group consisting of controlling formation pressure, maintaining borehole stability, and preventing the introduction of formation fluids into a borehole. Although the weighting agents are described herein are described in the context of treatment fluids for subterranean operations, other uses will be recognized by the skilled artisan.

While compositions and methods are described in terms of "comprising," "containing," or "including" various components or steps, the compositions and methods may also "consist essentially of" or "consist of" the various components and steps. Also, the terms in the claims have their plain, ordinary meaning unless otherwise explicitly and clearly defined by the patentee. Moreover, the indefinite articles "a" or "an," as used in the claims, are defined herein to mean one or more than one of the element that it introduces. If there is any conflict in the usages of a word or term in this specification and one or more patent or other documents that may be referenced herein, the definitions that are consistent with this specification should be adopted.

## Claims

1. A method comprising the steps of:
providing a treatment fluid for use in a subterranean formation, the treatment fluid comprising an oleaginous base fluid and a modified particulate weighting agent which comprises:
a particulate metal oxide comprising an oxide of a metal or metalloid selected from manganese, iron, titanium, silicon, zinc, aluminium, barium, calcium and magnesium; and
a polymer covalently linked to the particulate metal oxide, the polymer being selected from perfluoroalkyl polymers and perfluoropolyethers; and
introducing the treatment fluid into the subterranean formation;
wherein the oleaginous base fluid is a cycloalkane.

2. The method of Claim 1, wherein the treatment fluid is a cementing fluid.

3. The method of Claim 2, further comprising the step of allowing the cementing fluid to set in an area in the subterranean formation.

4. The method of Claim 2, wherein the cementing fluid is introduced into the subterranean formation via a wellbore casing string, and the cementing fluid is allowed to set to provide a set cement sheath.

5. The method of any preceding claim, wherein the particulate metal oxide has a particle diameter of less than 5 µm.

6. The method of any preceding claim, wherein the particulate metal oxide has at least one dimension that is 500 nm or less.

7. The method of any preceding claim, wherein the particulate metal oxide comprises an oxide of a metal or metalloid selected from the group consisting of manganese, iron, titanium, silicon, zinc, and any combination thereof.

8. The method of Claim 1, which is a drilling method employing the treatment fluid as a drilling fluid.

9. The method of any preceding claim, wherein the particulate metal oxide comprises manganese tetroxide.

## Patentansprüche

1. Verfahren, die folgenden Schritte umfassend:
Bereitstellen eines Behandlungsfluids zur Nutzung in einer unterirdischen Erdformation, wobei das Behandlungsfluid ein öliges Basisfluid und ein modifiziertes partikuläres Beschwerungsmittel umfasst, das Folgendes umfasst:
ein partikuläres Metalloxid, das ein Oxid aus einem Metall oder Metalloid umfasst, das aus Mangan, Eisen, Titan, Silizium, Zink, Aluminium, Barium, Calcium und Magnesium ausgewählt ist; und
ein Polymer, das kovalent mit dem partikulären Metalloxid verbunden ist, wobei das Polymer aus Perfluoralkylpolymeren und Perfluorpolyethern ausgewählt ist; und
Einführen des Behandlungsfluids in die unterirdische Erdformation;
wobei das ölige Basisfluid ein Cycloalkan ist.

2. Verfahren nach Anspruch 1, wobei das Behandlungsfluid ein Zementierfluid ist.

3. Verfahren nach Anspruch 2, ferner umfassend den Schritt des Zulassens, dass sich das Zementierfluid in einem Bereich in der unterirdischen Erdformation setzt.

4. Verfahren nach Anspruch 2, wobei das Zementierfluid über einen Bohrlochgehäusestrang in die unterirdische Erdformation eingeführt wird und sich das Zementierfluid setzen darf, um eine gesetzte Zementhülse bereitzustellen.

5. Verfahren nach einem vorhergehenden Anspruch, wobei das partikuläre Metalloxid einen Partikeldurchmesser von weniger als 5 µm aufweist.

6. Verfahren nach einem vorhergehenden Anspruch, wobei das partikuläre Metalloxid zumindest eine Abmessung aufweist, die 500 nm oder weniger beträgt.

7. Verfahren nach einem vorhergehenden Anspruch, wobei das partikuläre Metalloxid ein Oxid eines Metalls oder Metalloids umfasst, das aus der Gruppe ausgewählt ist, die aus Mangan, Eisen, Titan, Silizium, Zink und einer beliebigen Kombination davon besteht.

8. Verfahren nach Anspruch 1, wobei es sich um ein Bohrverfahren handelt, bei dem das Behandlungsfluid als Bohrfluid eingesetzt wird.

9. Verfahren nach einem vorhergehenden Anspruch, wobei das partikuläre Metalloxid Mangantetroxid umfasst.

## Revendications

1. Procédé comprenant les étapes de :
fourniture d'un fluide de traitement pour une utilisation dans une formation souterraine, le fluide de traitement comprenant un fluide à base oléagineuse et un agent de pondération particulaire modifié qui comprend :
un oxyde de métal particulaire comprenant un oxyde d'un métal ou d'un métalloïde choisi parmi le manganèse, le fer, le titane, le silicium, le zinc, l'aluminium, le baryum, le calcium et le magnésium ; et
un polymère lié par liaisons covalentes à l'oxyde de métal particulaire, le polymère étant choisi parmi les polymères perfluoroalkyles et les perfluoropolytéthers ; et
l'introduction du fluide de traitement à l'intérieur de la formation souterraine ;
à l'intérieure duquel le fluide à base oléagineuse est un cycloalcane.

2. Procédé selon la revendication 1, dans lequel le fluide de traitement est un fluide de cimentation.

3. Procédé selon la revendication 2, comprenant en outre l'étape permettant au fluide de cimentation de se solidifier dans une zone de la formation souterraine.

4. Procédé selon la revendication 2, dans lequel le fluide de cimentation est introduit dans la formation souterraine par un train de tubage de puits de forage, et dans lequel on permet au fluide de cimentation de se solidifier pour fournir une gaine de ciment.

5. Procédé selon une quelconque revendication précédente, dans lequel l'oxyde de métal particulaire possède un diamètre de particule inférieur à 5 µm.

6. Procédé selon une quelconque revendication précédente, dans lequel l'oxyde de métal particulaire possède au moins une dimension qui est de 500 nm ou inférieure.

7. Procédé selon une quelconque revendication précédente, dans lequel l'oxyde de métal particulaire comprend un oxyde d'un métal ou d'un métalloïde choisi dans le groupe constitué de manganèse, de fer, de titane, de silicium, de zinc, et de n'importe quelle combinaison de ces derniers.

8. Procédé selon la revendication 1, qui est un procédé de forage employant le fluide de traitement comme fluide de forage.

9. Procédé selon une quelconque revendication précédente, dans lequel l'oxyde de métal particulaire comprend du tétroxyde de manganèse.
